# EUROPEAN PATENT SPECIFICATION

(11) **EP 0 673 809 B1**
(45) Date of publication and mention of the grant of the patent: **31.10.2001**
(21) Application number: 95200607.0
(22) Date of filing: 14.03.1995
(51) Int. Cl.: B60R 21/26, C06D 5/06

(54) **Hybrid inflator with rapid pressurization-based flow initiation assembly**
Hybride Aufblasvorrichtung mit auf schneller Druckbeaufschlagung gegründeter Strömungseinleitungsvorrichtung
Gonfleur hybride à dispositif de déclenchement du débit basé sur une pressurisation rapide

(30) Priority: 18.03.1994 US 210668; 25.10.1994 US 328657; 16.02.1995 US 389297
(43) Date of publication of application: 27.09.1995
(60) Divisional application: 99203747.3
(73) Proprietor: OEA, INC., Aurora, Colorado 80015 (US)
(72) Inventor: Hamilton, Brian K., Littleton, Colorado 80122 (US); Baglini, James L., Englewood, Colorado 80112 (US); Parks, Brent A., Englewood, Colorado 80111 (US)
(74) Representative: Wharton, Peter Robert

(56) References cited:
- EP-A- 0 420 726
- EP-A- 0 520 104
- EP-A- 0 591 119
- DE-A- 2 046 265
- US-A- 3 721 456
- US-A- 3 901 530
- US-A- 3 966 226
- US-A- 4 938 813
- US-A- 5 125 684

## Description

### Field of the Invention

The present invention generally relates to the field of automotive inflatable safety systems and, more particularly, to a hybrid inflator which utilizes a rapid pressurization of an area proximate the main closure disk for initiating the flow to the air/safety bag.

### Background of the Invention

The evolution of inflators for automotive inflatable safety systems has resulted in the development of pressurized gas only inflators, propellant only inflators, and hybrid inflators. There are of course many design considerations for each of the above-noted types of inflators. In all three systems, two primary design considerations are that the air/safety bag must be expanded a predetermined amount in a predetermined amount of time in order to be operationally effective. As such, substantial development efforts have been directed to how the flow path is established between the inflator and the air/safety bag and how the subsequent flow is provided to the air/safety bag such that the above-identified objectives can be met. In hybrid inflators, which again require both a release of a stored, pressurized gas and an ignition of a gas and/or heat generating propellant, the manner of establishing the flow path to the air/safety bag and the manner of igniting the propellant must both be addressed in a way which meets the above-noted objectives.

Another important design consideration, particularly for inflators which utilize propellants, is the effect of the gases upon occupants of the automobile. That is, the gases within the expanded air/safety bag eventually permeate through the air/safety bag and are discharged to atmosphere. As such, it is desirable to have the gases within the air/safety bag be below a certain toxicity level. U.S. Patent Nos. 3,690,695; 3,788,667; and 3,966,226 generally address this issue. Moreover, the appearance of the gases is important. As an example, one problem with current state-of-the-art hybrid inflators is that they produce, in the gas output stream, copious quantities of metal salt fumes (e.g., potassium chloride). This salt is present because an oxygen source (e.g., potassium perchlorate), has been added to the propellant formulation to minimize carbon monoxide production by oxidizing all carbon in the propellant to carbon dioxide. This salt fume is highly objectional in a crash situation because it has both physiological and psychological effects, imposed at a time of great physical and psychological stress. The salt fume in the post-crash automobile cabin drastically reduces visibility for the crash victims, and creates anxiety over the possibility of fire. Current hybrid inflators use propellants which typically contain more than 70% potassium perchlorate, which yields about 54% of the propellant weight as potassium chloride fume.

Since the weight of the automobile is an important design consideration in many instances today, so too then is the weight of the inflator. Moreover, due to the limited space available in many automotive designs, the size of the inflator is also an important design consideration. These types of factors have effectively rendered pressurized gas only inflators obsolete. In hybrid inflators, these types of considerations have resulted in many changes to the structure of the inflator and the materials selected for use in this structure. However, there continues to be a need for improvements in these areas.

Although the performance of a given inflator will of course influence the manufacturer's/ supplier's position in the marketplace, system performance alone is no longer dispositive. That is, since inflatable safety systems are now being included in a large number of automobiles which will likely increase the number of manufacturers/suppliers of inflators, minimizing the cost of the inflator is becoming increasingly important to obtaining a competitive advantage. Consequently, it would be desirable to not only provide an inflator with competitive performance characteristics, but which is also cost competitive.

### Summary of the Invention

The present invention comprises an inflator as set out in claim 1 of the appended claims.

In a first embodiment, may include an inflator housing which contains the pressurized medium and the gas generator. The gas generator's housing may include at least one gas generator inlet port, namely the port(s) through which a flow from the inflator housing is provided into the gas generator housing after activation. The gas generator housing may also include at least one gas generator outlet port, namely the port(s) through which a flow is provided to the air/safety bag. In order to obtain a desired performance and including a timely initiation of the flow to the air/safety bag, a valve or a valve system is preferably operatively associated with at least one and preferably all of the gas generator inlet ports. That is, at least for the time period occurring after ignition of the propellant by an appropriate ignition assembly, this valve or valve system substantially may inhibit fluid communication between the inflator housing and the gas generator housing through the noted gas generator inlet port(s) until the pressure within the inflator housing exceeds the pressure within the gas generator housing by a certain degree. Once a certain pressure differential is achieved, the valve or valve system thereafter preferably allows flow from the inflator housing into the gas generator housing through the gas generator inlet port(s) such that the pressurized medium mixes with the propellant gases to thereby define the flow to the air/safety bag.

The above-noted valve or valve system may assume first and second positions to substantially inhibit and allow fluid communication, respectively, between the inflator housing and gas generator housing through the gas generator inlet port(s). The valve or valve system may be moved to the first position into sealing engagement with the aligned portion of the gas generator housing by a resulting pressure increase within at least a portion of the gas generator housing due to ignition of the propellant. As such, the valve or valve system thereby substantially prevents propellant gases from flowing through the gas generator inlet port(s) into the inflator housing. This may be utilized to pressurize at least a part of the gas generator housing at a rate which will timely initiate the flow to the air/safety bag or more specifically open the flow path between the inflator and the air/safety bag.

The valve or valve system may move from the noted first position to the second position as a result of the pressure in the inflator housing exceeding the pressure within at least a portion of the gas generator housing by a certain degree. That is, the valve or valve system will move to the position in which fluid communication is established between the inflator housing and the gas generator housing through the gas generator inlet port(s) after a flow has already been initiated to the air/safety bag or more specifically after opening the flow path. By forming the valve or valve system from a pliable material (e.g., roll stock), the noted movements may be generally radially directed, with the valve system actually collapsing generally radially inwardly away from the gas generator housing when moving to its second position. However, portions of the valve or valve system may remain affixed to the gas generator housing such that there is effectively a cantilevered connection therebetween and with the "free" end of the valve system being disposed adjacent to the gas generator inlet port(s).

The above-noted structure of the inflator may include a number of additional features. For instance and as noted, the valve system may further operate to substantially inhibit or limit the flow of propellant gases from the gas generator housing into the inflator housing. The peak pressure in the inflator housing after activation may therefore be reduced which allows for reducing the strength requirements of the inflator housing and thus the weight of the inflator (e.g., the wall thickness of the inflator housing may be reduced). Moreover, the gas generator housing may be separated into first and second fluidly interconnected chambers with the propellant being within the first chamber, and with the second chamber being positioned between the gas generator outlet(s) and the first chamber and having the gas generator inlet port(s) associated therewith.

With further regard to the multi-chamber design for the gas generator, the primary flow path for the pressurized medium within the inflator housing is directly into the second chamber of the gas generator housing. Mixing of the pressurized medium flowing into the second chamber from the inflator housing with the propellant gases flowing into the second chamber from the first chamber may be desirably promoted by selection of the positioning of the various fluid interconnections. This is particularly desirable when there is actually a chemical reaction between the propellant gases and the pressurized medium, in as in the present invention such as by utilizing an oxidizing pressurized medium to combust the propellant gases. For instance, the propellant gases may flow from the first chamber into the second chamber through an aspirator section and the gas generator inlet port(s) may be disposed to project the pressurized medium into the flow of propellant gases out of the aspirator nozzle or to project the pressurized medium upstream of the aspirator nozzle. In order to allow sufficient time for a sufficient mixing and chemical reaction between the propellant gases and the oxidizing pressurized medium, all gas generator inlet port(s) may be disposed a sufficient distance from the gas generator outlet port(s).

Further variation of the fluid interconnections between the second chamber and one or both of the inflator housing and first chamber may be utilized to obtain the noted types of benefits. As an example, the gas generator inlet port(s) may be oriented to induce a vortex flow within the second chamber due at least in part to the flow being provided thereto from the inflator housing. Furthermore, the fluid interconnection(s) between the first chamber and the second chamber may be oriented to also induce or augment the noted vortex motion within the second chamber due at least in part to the flow being provided thereto from the first chamber. The noted induction of a vortex motion within the second chamber promotes mixing of the propellant gases and the oxidizing pressurized medium and/or promotes a chemical reaction between the same prior to being provided to the air/safety bag (e.g., such that substantially all combustion of the propellant gases occurs in the inflator and not in the air/safety bag). Consequently, the length of the second chamber may be reduced, more specifically the distance between all gas generator inlet ports and all gas generator outlet ports, and yet still provide for effective mixing and reaction of the propellant gases and oxidizing pressurized medium prior to flowing to the air/safety bag. This is particularly desirable/useful for driver's side applications.

The inflator structure may also incorporate a closure disk which blocks the flow path to the air/safety bag and the disk may be further associated with the gas generator outlet port(s) and adjacent the second chamber. The fluid pressure within the second chamber due to the introduction of propellant gases therein may be used to rupture the disk when the inflator is activated. That is, the fluid pressure alone may act on the closure disk to open the same. In this case, the design may be such that the pressure in the second chamber increases at a greater rate than the pressure in the inflator housing after activation such that a rupturing of the closure disk occurs at the desired time. The pressure may increase in the inflator housing by utilizing one or more bleed ports to fluidly interconnect the first chamber of the gas generator housing and the inflator housing. By providing a limited quantity of propellant gases (e.g., so as to still realize a reduced peak pressure within the inflator housing) to flow into the inflator housing, the flow into the second chamber from the inflator housing after fluid communication is established in the above-noted manner may be substantially constant for a sufficient period of time.

The features discussed above may also be utilized in combination with the first embodiment of the invention. However, through utilization of the above-noted secondary combustion of the propellant gases and/or selection of a relatively small volume for the second chamber, the valve/valve system may not be required for all designs/applications. For instance, the secondary combustion itself may account for/produce at least about 30% and possibly about 50% of the rate of pressure increase or the pressure increase within the second chamber after ignition of the propellant. For certain designs/applications such as in a driver's side hybrid inflator, this may be sufficient to initiate flow the air/safety bag in a timely manner. A variation of this is a method for operating an inflatable safety system utilizing the above-noted combustion of propellant gases within a region proximate the main closure disk to affect the initiation of flow to the air/safety bag.

A second embodiment of hybrid inflator may include an inflator housing, the pressurized medium within the inflator housing, a main closure disk positioned between the pressurized medium and the air/safety bag, and the gas generator fluidly interconnected with the inflator housing. The gas generator may be separated into first and second fluidly interconnected housings with the first chamber containing a propellant. The second chamber is preferably positioned between the first chamber and the main closure disk, interfaces with the main closure disk, and is fluidly interconnectable with the inflator housing.

The second embodiment of the invention may operate by generating propellant gases, providing at least some of these propellant gases directly from the first chamber to the second chamber (i.e., some propellant gases may also be simultaneously provided to the inflator housing), substantially inhibiting a flow of these propellant gases within the second chamber to the inflator housing during the initial part of the generating propellant gases step and using this to open the main closure disk, some time thereafter allowing a flow from the inflator housing into the second chamber, and directing a flow to the air/safety bag after the opening step. Since there is a restriction of flow between the second chamber and the inflator housing during the initial part of operation, the pressure increase within the second chamber itself as a result of the introduction of propellant gases therein may be used to open the main rupture disk (e.g., fluid pressure acting directly on the main closure disk). Moreover, this also allows for the additional step of having the rate of pressurization within the second chamber exceed any rate of pressurization within the inflator housing such that the main closure disk is opened in a timely manner.

With the propellant used in the invention, toxic propellant combustion product gases may be generated. The inflator causes mixing of the propellant gases and the pressurized medium to reduce this toxicity and to further combust the propellant gases which thereby also provides enhanced expansive capabilities for the flow to the air/safety bag. This is facilitated by having a two component pressurized medium - one component being oxygen and the other component being an inert gas. The use of the noted type of propellant together with the noted type of pressurized medium also reduces the amount of propellant required for the inflator, and thus the weight of the inflator as well. Particularly in this case, since the supply of pressurized medium from the inflator housing to the second chamber is not initiated until after propellant gases have been generated and provided to the second chamber, the methodology may further include the step of retaining a supply of pressurized medium within the second chamber to mix with those propellant and ignition gases which are initially provided to the second chamber and provided to the air/safety bag.

The regulation of flow between the inflator housing and the second chamber of the gas generator housing may be provided by a valve or a valve system. Flow may be initiated from the inflator housing to the second chamber by moving this valve or valve system away from the flow path therebetween, such as by a collapsing of at least portions of the valve or valve system. This movement may also be dictated by a pressure differential which develops between the second chamber and the inflator housing, and the valve itself may monitor the noted differential pressure. For instance, when the pressure within the inflator housing exceeds the pressure within the second chamber by a certain degree, the valve may move and flow from the inflator housing to the second chamber may be initiated.

When the flow from the inflator housing (pressurized medium and possibly also a certain quantity of propellant gases which have already mixed and reacted with the pressurized medium) is directed into the second chamber, such may mix with propellant gases being provided to the second chamber from the first chamber. This mixing may be enhanced by inducing a vortex flow within the second chamber as a result of inducing rotation either one or both of the flows being provided thereto. This "enhanced mixing" may also allow for a sufficient "reaction" time for the propellant gases and pressurized medium prior to being provided to the air/safety bag. In order to provide for a substantially constant flow into the second chamber from the inflator housing for a sufficient period of time, a certain amount of the propellant gases may also be directed from the first chamber into the inflator housing (due to the introduction of a portion of propellant gases therein, for instance, to maintain a pressure head within the inflator housing.

### Brief Description of the Drawings

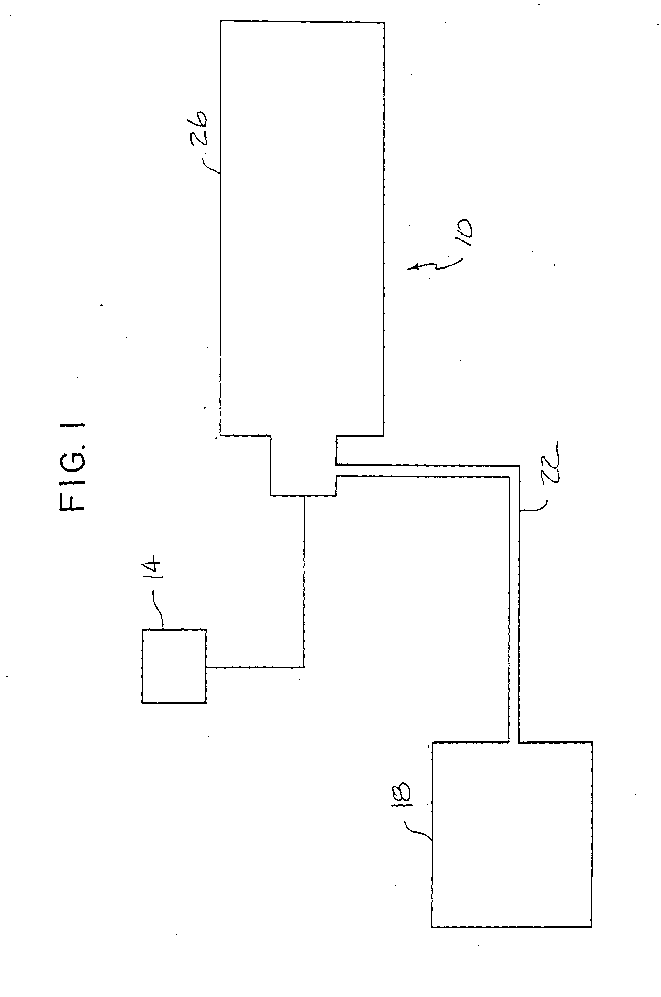

Fig. 1 is a schematic representation of an automotive inflatable safety system.

### Detailed Description

The present invention will be described with regard to the accompanying drawings which assist in illustrating various features of the invention. In this regard, the present invention generally relates to hybrid inflators for automotive inflatable safety systems. That is, the invention relates to an inflator which utilizes both a stored, pressurized gas and a gas and/or heat generating propellant. Various types of hybrid inflators are disclosed in U.S. Patent No. 5,230,531 to Hamilton et al. which is assigned to the assignee of this application.

One embodiment of an automotive inflatable safety system is generally illustrated in Fig. 1. The primary components of the inflatable safety system 10 include a detector 14, an inflator 26, and an air/safety bag 18. When the detector 14 senses a condition requiring expansion of the air/safety bag 18 (e.g, a predetermined deceleration), a signal is sent to the inflator 26 to release gases or other suitable fluids from the inflator 26 to the air/safety bag 18 via the conduit 22.

The hybrid inflator 26 utilizes a propellant, formulated as propellant grains, and a mixture of at least one inert gas and oxygen for the pressurized medium. Propellants, as used herein, are high temperature, fuel-rich propellants selected from nitramine compounds such as LOVA or HELOVA propellants and PETN or TAGN. More specifically, traditional gun-type propellants are those having a combustion temperature ranging from about 2,500°K to about 3,800°K, and typically greater than about 3,000°K, and are fuel-rich in that without excess oxygen, these propellants generate significant amounts of CO and H₂. The excess of fuel from these propellants typically requires additional oxygen between 5 and 25 mole percent, or sometimes even between 15 and 40 mole percent, of the stored gas to drive the reaction equilibrium to CO₂ and H₂O.

LOVA propellants (low vulnerability ammunition) and HELOVA propellants (high energy, low vulnerability ammunition) are another "traditional" gun-type propellant which may also be used for the propellant grains, such as a M39 LOVA propellant having a composition, on a weight percentage basis, of about 76.0% RDX (hexahydrotrinitrotriazine); about 12.0% cellulose acetate butyrate; about 4.0% nitrocellulose (12.6% nitrogen); about 7.60% acetyl triethyl citrate; and about 0.4% ethyl centralite. The M39 LOVA propellant is available from the Naval Surface Warfare Center in Indianhead, Maryland and Bofors in Europe (Sweden) and generates, without excess oxygen, about 32 mole percent CO and 30 mole percent H₂. The LOVA and HELOVA propellants are preferred over existing double-base propellants because they pass current U.S. automotive industry thermal stability standards, whereas double-base propellants do not. However, relatively high operating pressures are required for stable combustion of LOVA and HELOVA propellants. Notwithstanding the characteristics of the HPC-96 and LOVA propellants, they do serve to illustrate at least some of the principles/features of the present invention.

Due to the performance characteristics of propellants when used as the formulation for the propellant grains, together with the use of oxygen as a portion of the pressurized medium, it is possible to reduce the amount of propellant required for the gas generator 26 compared to current designs using, for example, 20-30 grams of FN 1061 - 10 available from the assignee of this patent application (FN 1061-10 has a composition, on a weight percentage basis, of about 7.93% polyvinyl chloride, 7.17% dioctyl adipate, 0.05% carbon black, 0.35% stabilizer, 8.5% sodium oxalate, 75% potassium perchlorate, and about 1% lecithin). For instance, generally for propellants which may be used in the formulation of the propellant grains the total grain weight may range (in passenger side applications) from about 10 grams to about 12 grams, and is preferably less than about 15 grams. In this case, it is preferable to utilize between about 150 grams and about 190 grams of pressurized medium with the oxygen being between about 10% to about 30% of this medium on a molar basis. More specifically, when about 169 grams of the pressurized medium is utilized, with about 15% of this on a mole percentage basis being oxygen, the total weight of the propellant grains may be about 10.4 grams. For driver side applications, the desired/required amount of propellant grains may be about 5 grams and for a side inflator application approximately 1.5 grams.

The above-identified reduction in the amount of propellant in comparison to the above-identified FN 1061-10 propellant composition may be also expressed as a ratio of the weight of the pressurized medium to the total weight of propellant grains. With regard to the FN 1061-10 propellant, the assignee of this application presently uses a ratio of about 7.04 for the weight of argon (i.e., the stored gas and corresponding with the pressurized medium associated with the present invention) to the weight of FN 1061-10 propellant. With regard to the use of a gun-type propellant, to achieve an inflator with the same output, weight, and size as an inflator with FN 1061-10, the ratio of the weight of the pressurized medium to the total weight of the propellant grains ranges from about 10 to about 20, and more preferably from about 14 to about 18, and is most preferably greater than about 15. As can be appreciated, these ratios may be further increased by use of hotter propellants, which would require even less propellant. In this regard, because the output gases of gun-type propellants are essentially free of hot particulate matter, the inflator can produce output gases at a higher temperature than can a particulate-laden inflator such as current state-of-the-art hybrids. This increase in temperature will allow the inflator to be smaller and lighter still, since the hotter gas is relatively more expansive. In addition to the foregoing, generally size and weight reductions of the inflator structure may be achieved when using gun-type propellants. For instance, when using even a ratio of 7.04 for gun-type propellants in an inflator, the same output may be achieved as in the case of using the same ratio of FN 1061 - 10, but the inflator with the gun-type propellant may be about 50% lighter and smaller than the inflator using FN 1061-10. The ratio of 7.04 can be used equally well for driver side applications and side inflators in the noted manner.

The above-identified reduction in the amount of propellant in comparison to the above-identified FN 1061 - 10 propellant composition may also be expressed as a ratio of the gram moles of the total gas output (i.e., the combination of the propellant gases and the pressurized medium) to the total weight of the propellant grains. With regard to the FN 1061-10 propellant, the assignee of the application presently uses a ratio of about 0.192 gram moles/gram of propellant for the moles of the output gas to the weight of the propellant. In comparison and generally in the case of a gun-type propellant for an inflator of the same output, weight, and size, the ratio of the moles of the output gas to the total weight of the propellant grains 90 ranges from about 0.35 gram moles per gram of propellant to about 0.6 gram moles per gram of propellant, more preferably from about 0.4 gram moles per gram of propellant to about 0.5 gram moles per gram of propellant, and is most preferably about 0.5 gram moles per gram of propellant. As noted above, for hybrid inflators using gun-type propellants and even using a ratio of 0.192 gram moles/gram of propellant, the inflator output is the same as a hybrid inflator using FN 1061-10, but the weight and size of the gun-type propellant hybrid inflator is reduced about 50%.

The pressurized medium is composed of at least one inert gas and oxygen. Inert gases are detailed as argon, helium, and neon, with argon being preferred. The oxygen portion of the pressurized medium is multi-functional. Initially, the reaction of the oxygen with the gaseous combustion products of the propellant of the propellant grains provides a source of heat which contributes to the expansion of the inert gas. This allows at least in part for a reduction in the amount of propellant which is required for the gas generator 26. Moreover, the reaction of the oxygen with the propellant combustion products also reduces any existing toxicity levels of the propellant gases to acceptable levels. For instance, the oxygen will convert preferably a substantial portion of existing carbon monoxide to carbon dioxide (e.g., convert at least about 85% of CO to CO₂) and existing hydrogen to water vapor (e.g., convert at least about 80% of the H₂ to H₂O), and a substantial portion of the unburned hydrocarbons will be similarly eliminated (e.g., eliminate at least about 75% of the hydrocarbons). As such, the performance of the gas generator as discussed above is significantly improved. That is, the medium and including the oxygen is drawn into the gas generator housing through the inlet nozzle on the end of the housing 86 by the pressure differential produced by the flow of the pressurized medium 36 by the sidewall of the gas generator housing having the discharge nozzles 200 thereon. As a result, there is a mixing of the medium with the CO and hydrogen-rich combustion products of the gas generant which dramatically improves the overall combustion efficiency of the gas generant, the mixing of the combustion products of the gas generant with the oxygen-rich medium, and the burning rate of the propellant grains. Gases are then drawn out of the discharge nozzles on the sidewall of the housing. The above configuration of the gas generator housing thereby greatly improves upon the performance of the inflator (e.g., by promoting the quick and efficient mixing of the oxygen with the propellant gases).

The amount of the at least one inert gas, on a molar basis, is generally between about 70% and about 90% and the amount of oxygen, on a molar basis, is generally between about 10% and about 30%. Generally, it is desirable to use an amount of oxygen in excess of that based upon theoretical conversions. However, it is also generally desirable to not have more than about 20% (molar) oxygen in the output gas (i.e., the combination of the propellant gases and the pressurized medium).

Because no existing propellant has proved satisfactory, a new propellant formulation was developed which constitutes a new class of propellant-- a propellant which combines the ballistic properties of double base propellants (ignites and burns well at low pressure) with the storage properties of nitramine LOVA propellants (performs well after storage at 107°C for 400 hours). This class of propellants as noted is referred to as a hybrid propellant.

Thermally stable gun-type propellants, unlike nitrocellulose-based propellants like HPC-96, when used as the formulation for the propellant grains 90 include a secondary explosive, namely a nitramine (RDX) in the case of the LOVA propellants. Other appropriate secondary explosives which may be used in the formulation of the propellant grains 90 include another nitramine, namely HMX (cyclotetramethylenetetrani-tramine), as well as PETN (pentaerythritol tetranitrate) and TAGN (triaminoguanidine nitrate). Table 1 below provides certain combustion properties for the RDX, HMX, and PETN secondary explosives.

**TABLE 1**

| TYPE | FLAME TEMPERATURE (°K) (at 3,000 psi) | COMBUSTION GASES PRODUCED w/o excess O₂ (mole %) |
|---|---|---|
| RDX | 3348 | 33% N₂ |
| | | 25% CO |
| | | 23% H₂O |
| | | 9% H₂ |
| | | 8% CO₂ |
| | | remainder others |
| HMX | 3340 | 33% N₂ |
| | | 25% CO |
| | | 23% H₂O |
| | | 9% H₂ |
| | | 8% CO₂ |
| | | remainder others |
| PETN | 3444 | 19.5% CO |
| | | 17% N₂ |
| | | 3% H₂ |
| | | 30% H₂O |
| | | 24% CO₂ |

Generally, in order to achieve a desired combination of certain ballistic properties and long-term thermal stability (e.g., to attempt to achieve the ballistic characteristics of a double-base propellant and the long-term aging characteristics or long-term thermal stability of a LOVA propellant), a secondary explosive may be combined with a binder system as the formulation for the propellant grains (as noted above "hybrid propellants"). The phrase "binder system", as used herein, refers to one or more compounds added to the propellant which are useful for modifying the physical, chemical, and/or ballistic properties of the propellant. Useful binder systems include those which incorporate propellant additives selected from the group consisting of binders, plasticizers, stabilizers, opacifiers, and combinations thereof.

Hybrid propellants for the propellant grains in the hybrid inflator exhibit good ballistic properties (i.e. burn rate and combustion temperature at a relatively low operating pressure), and exhibit acceptable long-term stability (e.g., one industry test for assessing long-term thermal stability being a statistically sufficient number of samples withstanding (not igniting) exposure to a temperature of 107°C for a period of 400 hours). Another test is inflators withstanding, without unacceptable loss of performance, (which is typically established/specified by the customer), exposures to a temperature of 100°C for 400 hours. More particularly, propellant grains 90 formed from a hybrid propellant burn at a combustion temperature ranging from about 2,000°K to about 3,800°K, at a rate ranging of about 0.1 inches per second (0.25 cm/sec) to about 1 inch per second (2.5 cm/sec), and at an operating pressure (the pressure within the gas generator housing) of about 4,000 psi (27.6 MPa) or less. More preferably, the propellant grains 90 formed from a hybrid propellant burn at a combustion temperature ranging from about 2,000°K to about 3,800°K, at a rate ranging from about 0.3 inches per second (0.76 cm/sec) to about 0.5 inches per second (1.26 cm/sec), and at an operating pressure of about 4,000 psi (27.6 MPa) or less.

In general, the hybrid propellant formulations comprise from about 50 wt% to about 90 wt% of a secondary explosive and from about 10 wt% to about 50 wt% of a binder system. More typically, these propellant formulations include from about 60 wt% to about 80 wt% of a secondary explosive and from about 20 wt% to about 40 wt% of a binder system. Preferably, the propellant formulation includes from about 70 wt% to about 80 wt% of a particular secondary explosive and from about 20 wt% to about 30 wt% of a binder system. Other additives and unavoidable impurities can also be present in these propellant compositions in minute amounts (i.e., in amounts less than about 5 wt% of the composition).

Typically, a resinous binder will be part of the binder system for a hybrid propellant formulation for the propellant grains. Nearly any type of binder soluble in common solvents (i.e. acetone, lower alcohols, etc.) can be used. However, it is generally desirable that the binder be an active or energetic compound. That is, it is desirable for the binder to be one which is easily combustible at the above-noted desired combustion temperatures and operating pressures. Furthermore, when using a binder in combination with a plasticizer, it is of course desirable that the binder be compatible with the plasticizer. Typical binders suitable for use in the propellant compositions include, but are not limited to, CA (cellulose acetate), CAB (cellulose acetate butyrate, EC (ethyl cellulose), and PVA (polyvinyl acetate). Moreover, GAP (an energetic glycidyl azide polymer) may be utilized as a binder component and such burns substantially more vigorously than CA. As such, it may be desirable to utilize only GAP as the binder with a secondary explosive. However, due to the significant differences in cost currently between GAP and CA, a hybrid propellant formulation may include both GAP and CA binder components.

Plasticizers can also be part of the binder system for the hybrid propellant formulation for the propellant grains 90. As noted, the plasticizer should be compatible with the binder. Moreover, it is generally desirable to use a binder system which is extrudable. Furthermore, at least for certain secondary explosives (e.g., nitramines) it is desirable to use energetic plasticizers, that is plasticizers that are capable of stable combustion within the above-noted operating temperatures and pressures. Useful energetic plasticizers include, but are not limited to, those selected from the group consisting of nitrate ester plasticizers such as TMETN (trimethylolethane trinitrate), BTTN (butanetriol trinitrate), and TEGDN (triethyleneglycol dinitrate) and glycidyl azide plasticizer and other compounds such as NG (nitroglycerin), and BDNPA/F (bis (2,2-dinitropropyl) acetal/formal).

Stabilizers may also be included in the binder system for the hybrid propellant formulation for the propellant grains 90. For instance, certain binders and/or plasticizers such as the above-noted nitrate ester plasticizers will decompose upon exposure to certain temperatures, and may affect ignition of the propellant grains 90 (i.e., upon exposure to certain temperatures the nitrate ester plasticizer will thermally decompose to the degree where ignition occurs). Consequently, stabilizers may be included in the hybrid propellant formulation which will "react" with the thermally decomposing binder and/or plasticizer to maintain stability (e.g., reduce the potential for premature ignition of the propellant) and thereby enhance the long-term stability of the hybrid propellant formulation. For instance, in the case of a nitrate ester plasticizer, useful stabilizers for the propellant formulation include those which are active materials, yet are nitrate acceptors. Suitable stabilizers include, but are not limited to, ethyl centralite (sym-diethyldiphenylurea), DPA (diphenylamine), and resorcinol.

One hybrid propellant formulation which has the desired ballistic properties and which has provided sufficient indications of suitable long-term stability include the combination of the nitramine secondary explosive RDX (hexahydrotrinitrotriazine) with a binder system including the binder CA (cellulose acetate), the plasticizer TMETN (trimethylolethane trinitrate), and the stabilizer EC (ethyl centralite). Generally, this hybrid propellant formulation may comprise at least about 70 wt% RDX, from about 5 wt% to about 15 wt% CA, from about 5 wt% to about 15 wt% TMETN, and no more than about 2 wt% EC. These general relative amounts provide the desired ballistic and long-term aging properties for the hybrid propellant. However, it will be appreciated that if propellant grains 90 are to be formed by extrusion from this formulation, refinements of the relative amounts within the noted ranges may be necessary.

Another hybrid propellant formulation which has the desired ballistic properties and which has provided sufficient indications of suitable long-term stability includes the nitramine secondary explosive RDX with a binder system including the binders CA and GAP (glycidyl azide polymer), and a suitable plasticizer (e.g., GAP plasticizer, TMETN, ATEC and combinations thereof). Generally, this hybrid propellant formulation may comprise from at least about 70 wt% and typically between about 70 wt% and 80% RDX, from about 5 wt% to about 15 wt% CA, and from about 5 wt% to about 15 wt% GAP, and about 5 wt% to 15 wt% plasticizer. These general relative amounts provide the desired ballistic and long-term aging properties for the hybrid propellant. However, it will be appreciated that if propellant grains are to be formed by extrusion from this formulation, refinements of the relative amounts within the noted ranges may be necessary.

In the case of hybrid propellants disclosed herein, as in the case of the double-base and LOVA propellants discussed above, during combustion significant quantities of carbon monoxide and hydrogen are produced (e.g., 35% CO and 19% H₂). Again, the formation of carbon monoxide and hydrogen gases through combustion of an inflator propellant would normally be unacceptable for an automotive inflatable safety system. However, when these types of hybrid propellants are used in the hybrid inflator and as noted above, the pressurized medium includes oxygen such that a substantial portion of the carbon monoxide and hydrogen (e.g., 95%) are converted during combustion or as part of a post-combustion reaction to harmless carbon dioxide and water vapor. The use of stored oxygen gas is particularly desirable because it obviates the need to include an oxygen source (e.g., potassium perchlorate) in the hybrid propellant formulation. Moreover, the highly exothermic reaction between the produced combustion gases of the propellant with the stored oxygen is particularly desirable because it enhances the heating value of the propellant, thereby minimizing the amount of propellant required for expanding the air/safety bag.

The hybrid propellants, when formulated into the propellant grains and incorporated into the hybrid inflator, may be used in the amounts specified above with regard to the gun-type propellants and specifically including the particulars presented above with regard to the relative amounts of propellant grains and pressurized medium. Moreover, the relative amounts of oxygen and the one inert gas for the pressurized medium 36 may also be used in the case of the hybrid propellants disclosed herein.

The following examples further assist in illustrating pertinent features of hybrid propellant formulations which include a secondary explosive and a binder system. As previously noted, all references to "wt%" refers to weight percentage.

### Example 1

A hybrid propellant composition comprising at least about 70 wt% RDX (hexahydrotrinitrotriazine), from about 5 wt% to about 15 wt% CA (cellulose acetate), from about 5 wt% to about 15 wt% TMETN (trimethylolethane trinitrate) and no more than about 2 wt% ethyl centralite was prepared and formed into cylindrical grains having an average density of about 1.7132 g/cc. A 10 g test sample was placed into a heavywall bomb chamber and fired into a tank. The test sample had a combustion temperature of about 2578°K and exhibited acceptable ballistic properties (i.e., a burn rate of 0.47 inches per second (1.18 cm/sec) at 4000 psi (27.6 MPa)). Generally, the performance curves generally approximated those presented in Figs 3-4. The gas produced contained about 36% carbon monoxide, about 24% nitrogen, about 19% hydrogen, about 16% water vapor and about 5% carbon dioxide. Long-term thermal stability of the composition was assessed and determined to be acceptable (e.g., the propellant itself was exposed to a temperature of 107°C for 400 hours and did not ignite; the propellant when contained within a hybrid inflator did not ignite when exposed to a temperature of 107°C for 400 hours, and thereafter upon activation of the same, the performance of the inflator was substantially unaffected by the heat treatment).

### Example 2

A propellant composition comprising at least about 70 wt% RDX (hexahydrotrinitrotriazine), from about 5 wt% to about 15 wt% cellulose acetate, and from about 5 wt% to about 15 wt% GAP (glycidyl azide polymer) was prepared and formed into cylindrical grains having an average density of about 1.6857 g/cc. A 10 g test sample was placed into a heavywall bomb chamber and fired into a tank. The test sample had a combustion temperature of about 2,357°K and exhibited acceptable ballistic properties (i.e., a burn rate of 0.48 inches per second (1.18 cm/sec) at 4,000 psi (27.6 MPa)). Generally, the performance curves generally approximated those presented in Figs. 3-4. The exhaust gas produced contained about 37% carbon monoxide, about 25% hydrogen, about 25% nitrogen, about 10% water vapor and about 3% carbon dioxide. Long term thermal stability of the composition was assessed and determined to be acceptable (e.g., the propellant itself was exposed to a temperature of 107°C for 400 hours and did not ignite; the propellant when contained within a hybrid inflator did not ignite when exposed to a temperature of 107°C for 400 hours, and thereafter upon activation of the same, the performance of the inflator was substantially unaffected by the heat treatment).

## Claims

1. An inflator (26) for an automotive inflatable safety system (10) comprising an air/safety bag (18) which includes a pressurized medium comprising at least one inert gas, selected from Ar, Ne and He, and oxygen, a gas generator containing a propellant including a secondary explosive and an inflator activating assembly for igniting the propellant to generate propellant gases, **characterized in that**:
the propellant consists of from about 50% to 90% by weight of secondary explosive and from about 10% to 50% by weight of a binder system together with less than about 5 weight per cent of other additives and unavoidable impurities;
the secondary explosive, selected from nitramine compounds, PETN and TAGN, is fuel-rich wherein, if the propellant is ignited without the oxygen, the propellant generates significant amounts of carbon monoxide and hydrogen, and wherein the propellant remains functional in the inflator when subject to a temperature of 107°C for a period of 400 hours such that said propellant, after being so subjected, ignites when exposed to its auto ignition temperature.

2. An inflator, as claimed in Claim 1, wherein:
said pressurized medium consists of oxygen and argon apart from adventitious impurities.

3. An inflator, as claimed in Claim 1 or 2, wherein:
said inert gas, on a molar basis, is about 70% to about 90% of said pressurized medium.

4. An inflator, as claimed in any of claims 1 to 3, wherein the secondary explosive is RDX (hexahydrotrinitrotriazine), HMX (cyclotetramethylenetetranitramine), PETN (pentaerythritol tetranitrate), or TAGN (triaminoguanidine nitrate).

5. An inflator, as claimed in any of claims 1 to 3, wherein: said secondary explosive comprises RDX (hexahydrotrinitro-triazine), and in which said binder system comprises cellulose acetate, TMETN (trimethylolethane trinitrate) and ethyl centralite.

6. An inflator, as claimed in any of claims 1 to 3, wherein: said secondary explosive comprises RDX (hexahydrotrinitro-triazine) and in which said binder system comprises cellulose acetate, GAP (glycidyl azide polymer) and plasticizer.

7. An inflator as claimed in any of claims 1 to 6, wherein: said secondary explosive has a greater weight percentage than other materials constituting said propellant.

## Patentansprüche

1. Gasgeneratoreinheit (26) für ein aufblasbares Kraftfahrzeug-Sicherheitssystem (10), das folgendes aufweist:
- einen Airbag/Sicherheitsbag (18), der ein unter Druck gesetztes Medium enthält, das wenigstens ein aus Ar, Ne und He ausgewähltes Inertgas und Sauerstoff aufweist,
- einen Gasgenerator, der einen Treibstoff enthält, der einen Sekundärsprengstoff aufweist, und
- eine Gasgeneratoreinheit-Aktivierungsanordnung, um den Treibstoff zu zünden und Treibgase zu erzeugen,
**dadurch gekennzeichnet, daß**:
- der Treibstoff aus ca. 50 bis 90 Gew.-% Sekundärsprengstoff und ca. 10 bis 50 Gew.-% eines Bindemittelsystems zusammen mit weniger als ca. 5 Gew.-% an anderen Additiven und unvermeidlichen Verunreinigungen besteht;
- der Sekundärsprengstoff, der aus Nitraminverbindungen, PETN und TAGN ausgewählt ist, brennstoffreich ist, wobei dann, wenn der Treibstoff ohne den Sauerstoff gezündet wird, der Treibstoff signifikante Mengen von Kohlenmonoxid und Wasserstoff erzeugt, und wobei der Treibstoff in der Gasgeneratoreinheit funktionsfähig bleibt, wenn er einer Temperatur von 107 °C für einen Zeitraum von 400 h unterworfen ist, so daß der Treibstoff, nachdem er so unterworfen worden ist, zündet, wenn er seiner Selbstzündungstemperatur ausgesetzt wird.

2. Gasgeneratoreinheit nach Anspruch 1,
**dadurch gekennzeichnet, daß**
das unter Druck gesetzte Medium, abgesehen von zufälligen Verunreinigungen, aus Sauerstoff und Argon besteht.

3. Gasgeneratoreinheit nach Anspruch 1 oder 2,
**dadurch gekennzeichnet, daß**
das Inertgas ca. 70 Mol-% bis ca. 90 Mol-% des unter Druck gesetzten Mediums ausmacht.

4. Gasgeneratoreinheit nach einem der Ansprüche 1 bis 3,
**dadurch gekennzeichnet, daß**
der Sekundärsprengstoff RDX (Hexahydrotrinitrotriazin), HMX (Cyclotetramethylentetranitramin), PETN (Pentaerythritoltetranitrat) oder TAGN (Triaminoguanidinnitrat) ist.

5. Gasgeneratoreinheit nach einem der Ansprüche 1 bis 3,
**dadurch gekennzeichnet, daß**
der Sekundärsprengstoff RDX (Hexahydrotrinitrotriazin) aufweist, und daß das Bindemittelsystem Celluloseacetat, TMETN (Trimethylolethantrinitrat) und Ethylcentralit aufweist.

6. Gasgeneratoreinheit nach einem der Ansprüche 1 bis 3,
**dadurch gekennzeichnet, daß**
der Sekundärsprengstoff RDX (Hexahydrotrinitrotriazin) aufweist, und daß das Bindemittelsystem Celluloseacetat, GAP (Glycidylazidpolymer) und Weichmacher aufweist.

7. Gasgeneratoreinheit nach einem der Ansprüche 1 bis 6,
**dadurch gekennzeichnet, daß**
der Sekundärsprengstoff einen größeren Massenanteil hat als andere den Treibstoff bildende Materialien.

## Revendications

1. Gonfleur (26) pour un système de sécurité gonflable pour automobiles (10) comprenant un coussin gonflable / de sécurité (18) qui comporte un milieu pressurisé comprenant au moins un gaz inerte, choisis parmi Ar, Ne et He et de l'oxygène, un générateur de gaz contenant un propulseur comportant un explosif secondaire et un assemblage d'activation de gonfleur pour amorcer le propulseur pour produire des gaz propulseurs, **caractérisé en ce que**
le propulseur est constitué d'environ 50 % à 90 % en poids d'explosif secondaire et d'environ 10 % à 50 % en poids d'un système de liant ainsi que de moins d'environ 5 pour cent en poids d'autres additifs et d'impuretés inévitables ;
l'explosif secondaire, choisi à partir de composés à nitramine, PETN et TAGN, est riche en carburant, dans lequel, si le propulseur est amorcé sans l'oxygène, le propulseur produit des quantités sensibles de monoxyde de carbone et d'hydrogène et dans lequel le propulseur reste fonctionnel dans le gonfleur, lorsqu'il est soumis à une température de 107°C pendant une période de 400 heures de façon que ledit propulseur, après ce traitement, s'amorce lorsqu'il est exposé à sa température d'auto-allumage.

2. Gonfleur selon la revendication 1, dans lequel :
ledit milieu pressurisé est constitué d'oxygène et d'argon, hormis les impuretés fortuites.

3. Gonfleur selon la revendication 1 ou 2, dans lequel :
ledit gaz inerte, sur une base molaire, est constitué d'environ 70 % à environ 90 % dudit milieu pressurisé.

4. Gonfleur selon l'une quelconque des revendications 1 à 3, dans lequel l'explosif secondaire est constitué de RDX (hexahydrotrinitrotriazine), HMX (cyclotétraméthylènetétrani-tramine), PETN (pentaérythritol tétranitrate) ou TAGN (triaminoguanidine nitrate).

5. Gonfleur selon l'une quelconque des revendications 1 à 3, dans lequel ledit explosif secondaire comprend du RDX (hexahydrotrinitrotriazine) et dans lequel ledit système de liant comprend de l'acétate de cellulose, du TMETN (triméthyloéthane trinitrate) et de l'éthyle centralite.

6. Gonfleur selon l'une quelconque des revendications 1 à 3, dans lequel ledit explosif secondaire comprend du RDX (hexahydrotrinitrotriazine) et dans lequel ledit système de liant comprend de l'acétate de cellulose, du GAP (polymère aglycidyle azide) et un plastifiant.

7. Gonfleur selon l'une quelconque des revendications 1 à 6, dans lequel ledit explosif secondaire possède un pourcentage en poids supérieur aux autres matériaux constituant ledit propulseur.
